# EUROPÄISCHE PATENTSCHRIFT

(11) **EP 0 876 252 B1**
(45) Veröffentlichungstag und Bekanntmachung des Hinweises auf die Patenterteilung: **16.10.2002**
(21) Anmeldenummer: 96928376.1
(22) Anmeldetag: 26.07.1996
(51) Int. Cl.: B32B 17/10, C08F 210/02, C09J 123/08

(54) **VERWENDUNG VON POLYMERISATEN AUF BASIS VON ETHYLEN, (METH)ACRYLSÄUREESTERN UND (METH)ACRYLSÄURE ZUM KANTENVERSIEGELN VON VERBUNDSICHERHEITSGLASSCHEIBEN**
USE OF POLYMERS BASED ON ETHYLENE, (METH)ACRYLIC ACID ESTERS AND (METH)ACRYLIC ACID FOR SEALING PANES OF LAMINATED SAFETY GLASS
UTILISATION DE POLYMERES A BASE D'ETHYLENE, D'ESTERS D'ACIDE (METH)ACRYLIQUE ET D'ACIDE (METH)ACRYLIQUE POUR SCELLER DES VITRES EN VERRE DE SECURITE FEUILLETE

(30) Priorität: 10.08.1995 DE 19529445
(43) Veröffentlichungstag der Anmeldung: 11.11.1998
(73) Patentinhaber: BASF AKTIENGESELLSCHAFT, 67056 Ludwigshafen (DE)
(72) Erfinder: KINGMA, Arend, Jouke, D-67069 Ludwigshafen (DE)
(86) Internationale Anmeldenummer: EP9603289
(87) Internationale Veröffentlichungsnummer: WO97006005

(56) Entgegenhaltungen:
- FR-A- 2 184 672
- GB-A- 1 154 620
- GB-A- 1 195 593
- GB-A- 1 298 732
- PATENT ABSTRACTS OF JAPAN vol. 009, no. 222 (C-302), 9.September 1985 & JP,A,60 086058 (YOKOHAMA GOMU KK), 15.Mai 1985,

## Beschreibung

Die vorliegende Erfindung betrifft die Verwendung von Polymerisaten auf Basis von Ethylen, (Meth)acrylsäureestern und (Meth)acrylsäure zum Kantenversiegelung von Verbundsicherheitsglasscheiben. Weiterhin betrifft die Erfindung wäßrige Emulsionen dieser Polymerisate sowie ein Verfahren zum Kantenversiegeln von Verbundsicherheitsglasscheiben unter Verwendung dieser wäßrigen Emulsionen. Weiterhin betrifft die Erfindung erfindungsgemäß versiegelte Verbundsicherheitsglasscheiben.

Verbundsicherheitsglasscheiben, welche inbesondere bei Automobilen von Bedeutung sind, sind in der Regel aus zwei Schichten Silikatglas, zwischen denen eine Kunststoffschicht eingearbeitet ist, aufgebaut. Hierzu können weitere Schichten aus optisch wirksamen Materialien kommen, welche den Ultraviolett- oder den Infrarot-Bereich ausfiltern. Die genannte Kunststoffschicht dient zum einen zum Zusammenhalt der beiden Silikatglasscheiben, zum anderen soll sie beim Bruch der Gesamtscheibe die Splitter zusammenhalten.

An die mechanische, thermische und chemische Beständigkeit dieser Kunststoffschicht werden hohe Anforderungen gestellt. Die hierfür heutzutage meist noch verwendeten Polyvinylbutyral-Filme erfüllen diese Anforderungen in nicht ausreichendem Maße. Insbesondere beim Eindringen von Feuchtigkeit und aggressiven Schadstoffen aus der Luft in diese Kunststoffschicht verliert diese ihr farblostransparentes Ausssehen und wird trübe.

Bei vollständig umschlossenen Verbundsicherheitsglasscheiben wie den Automobilwindschutzscheiben ist hier durch Rundum-Versiegelung in gewissem Maße Abhilfe schaffbar, jedoch beispielsweise bei derartigen Autofenster-Seitenscheiben, die solche Kantenversiegelungen nur unter ganz bestimmten Bedingungen gestatten, ist ein hermetischer Abschluß der innenliegenden Kunststoffschicht bislang nur schwer möglich.

Die Kantenversiegelung bei Aut of enster-Seitenscheiben ist nur so ausführbar, daß die Versiegelung farblos-transparent ausfällt und damit auch für einen Außenstehenden nicht erkennbar ist. Gebräuchliche farbige, d.h. meist dunkle bis schwarze Versiegelungsmassen, wie sie z.B. bei den Automobilwindschutzscheiben verwendet werden, kommen deshalb hier nicht in Betracht.

Aufgabe der vorliegenden Erfindung war es daher, ein Material bereitzustellen, welches sich zur Beschichtung von Verbundsicherheitsglasscheiben eignet und die notwendigen Anforderungen an mechanische, thermische und chemische Beständigkeit erfüllt. Dieses Material soll sich weiterhin auch zur farblos-transparenten Kantenversieglung solcher Scheiben eignen

FR-A-2,184,672 beschreibt Copolymere aus Ethylen und Acrylsäure, die zur Kantenversiegelung von Verbundsicherheitsglasscheiben verwendet werden.

Aus der DE-A 21 36 076 (1) sind Copolymerisate aus Ethylen, Vinylacetat, 2-Ethylhexylacrylat und Methacrylsäure bekannt, die durch Hochdruckpolymerisation hergestellt werden. Diese Copolymerisate eignen sich zum Verbinden zweier Glasplatten zu Fahrzeugwindschutzscheiben. Sie werden hierzu auf die Scheiben als Film aufgeschmolzen oder als Lösung aufgebracht.

In der US-A 4 130 667 (2) werden Copolymerisate aus α-Olefinen wie Ethylen und ungesättigten Carbonsäuren wie (Meth)acrylsäure beschrieben, die noch eine dritte Monomerkomponente wie einen ungesättigten Carbonäureester, z.B. 2-Ethylhexyl(meth)acrylat, mit einpolymerisiert enthalten können. Diese Copolymerisate eignen sich zum Beschichten von Glasoberflächen, z.B. bei Glasflaschen. Das Copolymerisat wird auf die Glasoberfläche pulverförmig aufgerollt und dann erhitzt, um den beschriebenen Schutzüberzug zu erzeugen.

Gegenstand der vorliegenden Erfindung ist nun die Verwendung von Polymerisaten aus

| | | |
|---|---|---|
| A) | 30 bis 90 Gew.-% | Ethylen, |
| B) | 0 bis 10 Gew.-% | weiterer α-Olefine mit 2 bis 12 C-Atomen, welche auch Halogenatome tragen können, |
| C) | 3 bis 40 Gew.-% | eines oder mehrerer Acryl- oder Methacrylsäureestern, bei denen der Esterrest aus C₁- bis C₂₀-Alkyl, C₅- bis C₁₈-Cycloalkyl oder C₇- bis C₁₈-Aralkyl besteht, wobei die genannten Esterreste auch Halogenatome tragen können, |
| D) | 7 bis 30 Gew.-% | Acrylsäure und/oder Methacrylsäure und |
| E) | 0 bis 10 Gew.-% | weiterer copolymerisierbarer Monomerer |

zum Kantenversiegeln von Verbundsicherheitsglasscheiben.

Als Komponente B) eignen sich neben Ethylen als Komponente A) weitere α-Olefine mit Vinyliden- oder insbesondere Vinyl-Gruppierungen mit 2 bis 12, insbesondere 2 bis 9 C-Atomen, welche auch Halogenatome wie Chlor-, Brom- oder insbesondere Fluoratome tragen können. Beispiele für solche α-Olefine sind Propen, 1-Buten, Isobuten, 1-Propen, 1-Hexen, 1-Hepten, 1-Octen, 1-Nonen, 1-Decen, 1-Undecen, 1-Dodecen, Butadien, Styrol, α-Methylstyrol, Vinyltoluole, Monofluorethylen, 1,1- und 1,2-Difluorethylen, Trifluorethylen, Tetrafluorethylen, Monochlortrifluorethylen, 1,1-Dichlor-2,2-difluorethylen, 3-Fluorpropen, 3,3-Difluorpropen und 3,3,3-Trifluorpropen.

Die α-Olefine B) dienen zum Ersatz eines Teils des Ethylens A), um die Eigenschaften des resultierenden Polymerisates zu modifizieren.

Als Komponente C) kommen vorzugsweise solche Acryl- oder Methacrylsäureester in Betracht, bei denen der Esterrest aus linearem oder vorzugsweise verzweigtem C₆- bis C₁₈-Alkyl, aus C₆- bis C₁₂-Cycloalkyl oder aus C₇- bis C₁₄-Aralkyl, insbesondere -Phenylalkyl, besteht, wobei die genannten Esterreste auch Halogenatome wie Chlor, Brom oder vor allem Fluor tragen können. Beispiele für Verbindungen C) sind Methyl(meth)acrylat, Ethyl(meth)acrylat, n-Propyl(meth)acrylat, iso-Propyl(meth)acrylat, n-Butyl(meth)-acrylat, iso-Butyl(meth)acrylat, sec.-Butyl(meth)acrylat, tert.-Butyl(meth)acrylat, n-Pentyl(meth)acrylat, neo-Pentyl(meth)-acrylat, n-Hexyl(meth)acrylat, n-Heptyl(meth)acrylat, n-Octyl(meth)acrylat, 2-Ethylhexyl(meth)acrylat, n-Nonyl(meth)acrylat, iso-Nonyl(meth)acrylat, n-Decyl(meth)acrylat, n-Dodecyl(meth)-acrylat, iso-Tridecyl(meth)acrylat, n-Tetradecyl(meth)acrylat, n-Hexadecyl(meth)acrylat, n-Octadecyl(meth)acrylat, n-Eicosyl(meth)acrylat, Cyclopentyl(meth)acrylat, Cyclohexyl(meth)-acrylat, 2-, 3- und 4-Methylcyclohexyl(meth)acrylate, 2,3-, 2,4-, 2,5-, 2,6-, 3,4- und 3,5-Dimethylcyclohexyl(meth)acrylate, Cycloheptyl(meth)acrylat, Cyclooctyl(meth)acrylat, Cyclohexylmethyl(meth)acrylat, 2-(Cyclohexyl)ethyl(meth)acrylat, 3-(Cyclohexyl)propyl(meth)acrylat, 4-(Cyclohexyl)butyl(meth)acrylat, 6-(Cyclohexyl)hexyl(meth)acrylat, 8-(Cyclohexyl)octyl(meth)acrylat, 12-(Cyclohexyl)dodecyl(meth)acrylat, Benzyl(meth)acrylat, 2-Phenylethyl(meth)acrylat, 3-Phenylpropyl(meth)acrylat, 4-Phenylbutyl(meth)acrylat, 6-Phenylhexyl(meth)acrylat, 8-Phenyloctyl(meth)acrylat, 12-Phenyldodecyl(meth)acrylat, 2-, 3- und 4-Methylbenzyl(meth)acrylat, Mono-, Diund Trifluormethyl(meth)acrylate sowie Mono-, Di-, Tri- und Tetrafluorethyl(meth)acrylate.

Als Komponente D) werden Acrylsäure allein oder Mischungen aus Acrylsäure und Methacrylsäure mit einem Anteil von 50 bis 100 Gew.-% Acrylsäure bevorzugt.

Die Komponente E) dient zur weiteren Modifizierung der Eigenschaften des resultierenden Polymerisates. Als Comonomer E) können beispielsweise Vinylester wie Vinylacetat oder Vinylpropionat eingesetzt werden.

Bevorzugte Mengenbereiche für die eingesetzten Monomerkomponenten A) bis E), jeweils bezogen auf die Gesamtmenge der Monomerenmischung, sind folgende:
A) 50 bis 75 Gew.-%, insbesondere 55 bis 70 Gew.-%
B) 0 bis 8 Gew.-%, insbesondere 0 bis 5 Gew.-%
C) 10 bis 25 Gew.-%, insbesondere 13 bis 22 Gew.-%
D) 15 bis 25 Gew.-%, insbesondere 17 bis 23 Gew.-%
E) 0 bis 5 Gew.-%, insbesondere 0 bis 3 Gew.-%.

In einer bevorzugten Ausführungsform verwendet man Polymerisate aus

| | | |
|---|---|---|
| A) | 50 bis 75 Gew.-% | Ethylen, |
| B) | 0 bis 8 Gew.-% | weiterer α-Olefine mit 2 bis 9 C-Atomen, welche auch Halogenatome tragen können, |
| C) | 10 bis 25 Gew.-% | eines oder mehrerer Acryl- oder Methacrylsäureester, bei denen der Esterrest aus C₆- bis C₁₈-Alkyl, C₆- bis C₁₂-Cycloalkyl oder C₇- bis C₁₄-Aralkyl besteht, wobei die genannten Esterreste auch Halogenatome tragen können, |
| D) | 15 bis 25 Gew.-% | Acrylsäure und/oder Methacrylsäure und |
| E) | 0 bis 5 Gew.-% | weiterer copolymerisierbarer Monomerer |

zum Kantenversiegeln von Verbundsicherheitsglasscheiben.

Die beschriebenen Polymerisate sind im Prinzip bekannt. Sie lassen sich durch alle gängigen Polymerisationsverfahren herstellen, bevorzugt werden hierbei die Emulsionspolymerisation und insbesondere die Hochdruckpolymerisation bei Temperaturen von 150 bis 300°C und Drücken von 1200 bis 3000 bar.

Zur besseren Einstellung der Eigenschaften der erfindungsgemaß verwendeten Polymerisate, beispielsweise um Klebrigkeitsprobleme zu vermeiden, können auch Mischungen der Polymerisate aus den Monomeren A) bis E) und weiterhin auch Mischungen dieser Polymerisate mit anderen Ethylencopolymerisaten, z.B. Ethylen-(Meth)-acrylsäure-Copolymerisate, eingesetzt werden.

Verbundsicherheitsglasscheiben sind in vielen technischen Bereichen verbreitet. Beispielsweise verwendet man sie beim Wohnungsund Gebäudebau. Ein bevorzugtes Einsatzgebiet ist jedoch der Fahrzeugbau. So findet man Fahrzeugverbundsicherheitsglasscheiben z.B. bei Personenkraftwagen, Lastkraftwagen, Bussen, Baufahrzeugen wie Baggern und Planierraupen, landwirtschaftlichen Fahrzeugen wie Traktoren oder Eisenbahnfahrzeugen wie Waggons zur Personenbeförderung und Lokomotiven.

Setzt man die beschriebenen Polymerisate als Beschichtungsmedium bei Verbundsicherheitsglasscheiben, insbesondere Fahrzeugverbundsicherheitsglasscheiben, ein, so ist hier in erster Linie die Verwendung als Beschichtungsmedium zwischen zwei Schichten solcher Scheiben gemeint. Es sind jedoch im Sinne der vorliegenden Erfindung auch Beschichtungen auf den Außenflächen von Verbundsicherheitsglasscheiben, insbesondere Fahrzeugverbundsicherheitsglasscheiben, möglich, um diese beispielsweise schmutzabweisend oder kratzfest zu machen.

Eine weitere Einsatzmöglichkeit ist die Kantenversiegelung von Verbundsicherheitsglasscheiben, insbesondere von Fahrzeugverbundsicherheitsglasscheiben. Hier kommt vor allem die obere Kantenversiegelung von herunterkurbelbaren Autofenster-Seitenscheiben in Betracht, die - wie oben angesprochen - nur farblos-transparent ausgeführt werden kann.

Die beschriebenen Polymerisate können auf die Verbundsicherheitsglasscheiben durch alle übliche Techniken, beispielsweise durch Aufstreuen als Pulver oder Auflegen als Folie oder Film und anschließendes Aufschmelzen, aufgebracht werden. In einer bevorzugten Ausführungsform appliziert man sie jedoch in Form einer wäßrigen Emulsion mit einem Feststoffgehalt von 5 bis 40 Gew.-%, insbesondere 10 bis 35 Gew.-%, wobei 10 bis 100 %, insbesondere 40 bis 100 % der Carboxylgruppe durch Ammoniak (NH₃) oder niedermolekulare Amine neutralisiert sind. Als niedermolekulare Amine kommen hier vor allem primäre, sekundäre und tertiäre Amine mit 1 bis 25, insbesondere 2 bis 12 C-Atomen in Betracht. Diese Amine können noch Hydroxylgruppen tragen oder Ethersauerstoffunktionen aufweisen. Weiterhin können diese Amine Carbonsäureester-Gruppierungen im Molekül tragen, insbesondere aminogruppenhaltige ungesättigte Carbonsäureester, z.B. Aminoalkyl (meth)acrylate, sind hier von Interesse. Beispiele für solche Amine sind Methylamin, Dimethylamin, Trimethylamin, Ethylamin, Diethylamin, Triethylamin, n-Butylamin, Di-(n-butyl)amin, Tri-(n-butyl)amin, Piperidin, Morpholin, Ethanolamin, Diethanolamin, Triethanolamin, Monoethylethanolamin, Dimethylethanolamin, iso-Propanolamin, Di-(iso-propanol)amin, Tri-(iso-propanolamin) und (2-Aminoethyl)acrylat. Die genannten Amine wirken sich vorteilhaft beim Verfestigungsvorgang des Polymerisates auf dem Glas und auf die Eigenschaften der so erzeugten Kunststoffschichten aus.

Vorzugsweise sind die beschriebenen wäßrigen Emulsionen emulgatorfrei, da die erfindungsgemäß verwendeten Polymerisate in der Regel selbstemulgierend sind, insbesondere bei Gehalten an der Komponente D) von 15 Gew.-% oder darüber. Die beschriebenen wäßrigen Emulsionen werden vorteilhafterweise durch Druckemulsion nach den üblichen Verfahren hergestellt.

Zur besseren Haftung der beschriebenen wäßrigen Emulsionen auf den Flächen oder Kanten der Verbundsicherheitsglasscheiben können diese vorher mit üblichen haftvermittelnden Mitteln wie Primern behandelt werden.

Gegenstand der vorliegenden Erfindung ist somit ein Verfahren zum Beschichten oder Versiegeln von Verbundsicherheitsglasscheiben, insbesondere Fahrzeugverbundsicherheitsglasscheiben, welches dadurch gekennzeichnet ist, daß man die beschriebenen wäßrigen Emulsionen auf das Verbundsicherheitsglas aufbringt und trocknet, wobei das Trocknen nach den üblichen Methoden erfolgt.

Da die beschriebenen wäßrigen Emulsionen selbst auch neu sind, sind sie ebenfalls Gegenstand der vorliegenden Erfindung.

Gegenstand der vorliegenden Erfindung sind weiterhin auch die erfindungsgemäß versiegelten Verbundsicherheitsglasscheiben.

Die mit den erfindungsgemäß verwendeten Polymerisaten hergestellten Beschichtungen auf Verbundsicherheitsglasscheiben sind mechanisch, thermisch und chemisch hochbeständig. Insbesondere werden so erzeugte Verbundsicherheitsglasscheiben durch Feuchtigkeitsund Schadstoffeinflüsse aus der Luft auch bei ungenügender oder fehlender Kantenversiegelung praktisch nicht oder nur sehr langsam trübe. Bei Verwendung der beschriebenen Polymerisate kann daher meist auf eine bisher übliche Kantenversiegelung verzichtet werden.

Die beschriebenen Polymerisate sind weiterhin die ideale Kantenversiegelungsmasse für Verbundsicherheitsglasscheiben, vor allem für Autofenster-Seitenscheiben, welche im Inneren mit nicht so beständigen herkömmlichen Beschichtungsmedien wie Polyvinylbutyral-Filmen versehen sind, da sie einen hermetischen Abschluß gewährleisten, praktisch unbegrenzt farblos-transparent bleiben und als Versiegelungsmasse dem bloßen Auge nicht erkennbar sind.

### Beispiel 1

### Kantenversiegelung von Verbundsicherheitsglasscheiben

Eine Verbundsicherheitsglasscheibe, welche sich als Autofenster-Seitenscheibe eignen könnte, wurde mit der wäßrigen emulgatorfreien Emulsion aus Beispiel 1 kantenversiegelt, indem die Emulsion auf die Kantenfläche aufgebracht und getrocknet wurde. Man erhielt eine nicht sichtbare, farblos-transparente Versiegelung, welche sich unter üblichen Bewitterungsbedingungen nicht veränderte.

## Patentansprüche

1. Verwendung von Polymerisaten aus
| | | |
|---|---|---|
| A) | 30 bis 90 Gew.-% | Ethylen, |
| B) | 0 bis 10 Gew.-% | weiterer α-Olefine mit 2 bis 12 C-Atomen, welche auch Halogenatome tragen können, |
| C) | 3 bis 40 Gew.-% | eines oder mehrerer Acryl- oder Methacrylsäureestern, bei denen der Esterrest aus C₁- bis C₂₀-Alkyl, C₅- bis C₁₈-Cycloalkyl oder C₇- bis C₁₈-Aralkyl besteht, wobei die genannten Esterreste auch Halogenatome tragen können, |
| D) | 7 bis 30 Gew.-% | Acrylsäure und/oder Methacrylsäure und |
| E) | 0 bis 10 Gew.-% | weiterer copolymerisierbarer Monomerer |
zur Kantenversiegelung von Verbundsicherheitsglasscheiben.

2. Verwendung von Polymerisaten aus
| | | |
|---|---|---|
| A) | 50 bis 75 Gew.-% | Ethylen, |
| B) | 0 bis 8 Gew. -% | weiterer α-Olefine mit 2 bis 9 C-Atomen, welche auch Halogenatome tragen können, |
| C) | 10 bis 25 Gew.-% | eines oder mehrerer Acryl- oder Methacrylsäureester, bei denen der Esterrest aus C₆- bis C₁₈-Alkyl, C₆- bis C₁₂-Cycloalkyl oder C₇- bis C₁₄-Aralkyl besteht, wobei die genannten Esterreste auch Halogenatome tragen können, |
| D) | 15 bis 25 Gew.-% | Acrylsäure und/oder Methacrylsäure und |
| E) | 0 bis 5 Gew.-% | weiterer copolymerisierbarer Monomerer nach Anspruch 1. |

3. Verwendung von Polymerisaten nach Anspruch 1 oder 2 zur Kantenversiegelung von Fahrzeugverbundsicherheitsglasscheiben.

4. Verfahren zum Kantenversiegeln von Verbundsicherheitsglasscheiben, **dadurch gekennzeichnet, daß** man wäßrige Emulsionen der Polymerisate gemäß Anspruch 1 oder 2 mit einem Feststoffgehalt von 5 bis 40 Gew.-%, wobei 10 bis 100 % der Carboxylgruppen durch Ammoniak oder niedermolekulare Amine neutralisiert sind, auf das Verbundsicherheitsglas aufbringt und trocknet.

5. Verbundsicherheitsglasscheiben, **gekennzeichnet durch** eine Kantenversiegelung mit Polymerisaten gemäß Anspruch 1 oder 2.

## Claims

1. The use of polymers made from
A) from 30 to 90% by weight of ethylene,
B) from 0 to 10% by weight of other α-olefins having from 2 to 12 carbon atoms, which may also bear halogen atoms,
C) from 3 to 40% by weight of one or more acrylic or methacrylic esters in which the ester radical is composed of C₁-C₂₀-alkyl, C₅-C₁₈-cycloalkyl, or C₇-C₁₈-aralkyl, where the ester radicals mentioned may also bear halogen atoms,
D) from 7 to 30% by weight of acrylic acid and/or methacrylic acid, and
E) from 0 to 10% by weight of other copolymerizable monomers,
for the edge-sealing of panes of laminated safety glass.

2. The use of polymers made from
A) from 50 to 75% by weight of ethylene,
B) from 0 to 8% by weight of other α-olefins having from 2 to 9 carbon atoms, which may also bear halogen atoms,
C) from 10 to 25% by weight of one or more acrylic or methacrylic esters in which the ester radical is composed of C₆-C₁₈-alkyl, C₆-C₁₂-cycloalkyl, or C₇-C₁₄-aralkyl, where the ester radicals mentioned may also bear halogen atoms,
D) from 15 to 25% by weight of acrylic acid and/or methacrylic acid, and
E) from 0 to 5% by weight of other copolymerizable monomers,
as claimed in claim 1.

3. The use of polymers as claimed in claim 1 or 2 for the edge-sealing of panes of laminated safety glass for vehicles.

4. A process for the edge-sealing of panes of laminated safety glass, which comprises applying to the laminated safety glass, and drying, aqueous emulsions of the polymers as claimed in claim 1 or 2 with a solids content of from 5 to 40% by weight, where from 10 to 100% of the carboxy groups have been neutralized by ammonia or by low-molecular-weight amines.

5. A pane of laminated safety glass, wherein polymers as claimed in claim 1 or 2 have been used for edge-sealing.

## Revendications

1. Utilisation de polymères constitués
A) de 30 à 90 % en poids d'éthylène,
B) de 0 à 10 % en poids d'autres α-oléfines ayant de 2 à 12 atomes de carbone et pouvant aussi porter des atomes d'halogène,
C) de 3 à 40 % en poids d'un ou plusieurs esters de l'acide acrylique ou de l'acide méthacrylique, dans lesquels le résidu ester est constitué d'un groupe alkyle en C₁ à C₂₀, cycloalkyle en C₅ à C₁₈ ou aralkyle en C₇ à C₁₈, ces résidus ester pouvant aussi porter des atomes d'halogène,
D) de 7 à 30 % en poids d'acide acrylique et/ou d'acide méthacrylique, et
E) de 0 à 10 % en poids d'autres monomères copolymérisables,
pour sceller les bords de vitres en verre de sécurité feuilleté.

2. Utilisation, selon la revendication 1, de polymères constitués
A) de 50 à 75 % en poids d'éthylène,
B) de 0 à 8 % en poids d'autres α-oléfines ayant de 2 à 9 atomes de carbone et pouvant aussi porter des atomes d'halogène,
C) de 10 à 25 % en poids d'un ou plusieurs esters de l'acide acrylique ou de l'acide méthacrylique, où le résidu ester est constitué d'un groupe alkyle en C₆ à C₁₈, cycloalkyle en C₆ à C₁₂ ou aralkyle en C₇ à C₁₄, ces résidus ester pouvant aussi porter des atomes d'halogène,
D) de 15 à 25 % en poids d'acide acrylique et/ou d'acide méthacrylique, et
E) de 0 à 5 % en poids d'autres monomères copolymérisables.

3. Utilisation de polymères selon la revendication 1 ou 2 pour le scellage des bords de vitres en verre de sécurité feuilleté pour automobiles.

4. Procédé pour le scellage des bords de vitres en verre de sécurité feuilleté, **caractérisé en ce qu'**on applique sur le verre de sécurité feuilleté des émulsions aqueuses des polymères selon la revendication 1 ou 2, ayant une teneur en extrait sec de 5 à 40 % en poids, ce à l'occasion de quoi 10 à 100 % des groupes carboxyle étant neutralisés par de l'ammoniaque ou des amines à faible masse moléculaire, et on sèche.

5. Vitres en verre de sécurité feuilleté, **caractérisées par** un scellement des bords par des polymères selon la revendication 1 ou 2.
